**Europäisches Patentamt**

**European Patent Office**

**Office européen des brevets**

(11) Veröffentlichungsnummer: **0 229 964 B1**

(12) **EUROPÄISCHE PATENTSCHRIFT**

(45) Veröffentlichungstag der Patentschrift: **20.03.91**

(51) Int. Cl.5: **B60P 3/12**

(21) Anmeldenummer: **86116984.5**

(22) Anmeldetag: **06.12.86**

(54) **Arbeits-Fahrzeug, insbesondere Bergefahrzeug.**

(30) Priorität: **23.01.86 DE 3601905**

(43) Veröffentlichungstag der Anmeldung:
**29.07.87 Patentblatt 87/31**

(45) Bekanntmachung des Hinweises auf die
Patenterteilung:
**20.03.91 Patentblatt 91/12**

(84) Benannte Vertragsstaaten:
**DE ES FR GB**

(56) Entgegenhaltungen:
**EP-A- 0 153 187**
**EP-A- 0 168 618**
**DE-A- 3 613 603**

**Prospekt der Firma "SCANIA",**
**T5441-314/09.85/2000 (1083952)**

(73) Patentinhaber: **FAUN GmbH**
**Postfach 10 01 08**
**W-8560 Lauf a.d. Pegnitz 1(DE)**

(72) Erfinder: **Jellinghaus, Peter, Dipl.-Ing. (FH)**
**Stettiner Strasse 23**
**W-8560 Lauf a.d. Pegnitz(DE)**
Erfinder: **Teichmann, Jürgen Walter, Dipl.-Ing.**
**(TU)**
**Fritz Schütte Strasse 15**
**W-4953 Petershagen 1(DE)**

(74) Vertreter: **Rau, Manfred, Dr. Dipl.-Ing. et al**
**Rau & Schneck, Patentanwälte Königstrasse**
**2**
**W-8500 Nürnberg 1(DE)**

EP 0 229 964 B1

## Beschreibung

Die Erfindung bezieht sich auf ein Arbeits-Fahrzeug nach dem Oberbegriff des Anspruches 1.

Aus dem Prospekt der Firma Scania, T 5441-314/o9.85/2ooo (1o83952) ist es bekannt, Stützschilder am freien hinteren Ende von Abschleppfahrzeugen, Bergepanzern, Forstschleppern o. dgl. anzubringen, die einen an einer Teleskop-Führung angebrachten Schild aufweisen, der in den Boden gedrückt werden kann, wenn von dem Fahrzeug weitgehend horizontale Zugkräfte, beispielsweise beim Bergen von anderen Fahrzeugen oder beim Heranziehen von Baumstämmen, aufzubringen sind. Bei solchen in der Regel schweren Arbeits-Fahrzeugen muß ein hinterer Böschungsraum vorhanden sein, bei dem es sich um einen Freiraum handelt, der zum einen durch den als Ebene gedachten Boden und eine Böschungslinie begrenzt wird, die unter Einschluß eines Böschungswinkels gegenüber dem Boden vom hinteren Auflagepunkt des jeweiligen Hinterrades auf dem Boden hochsteigt zum unteren hinteren freien Ende des Fahrzeuges. In diesem Böschungsraum dürfen sich keine Fahrzeugteile befinden. Der zwischen der hinteren Böschungslinie und dem ebenen Boden eingeschlossene Böschungswinkel gibt also den Winkel an, um den der Boden ansteigen kann, ohne daß das Fahrzeug beim Verfahren aufsetzt. Die bei den bekannten Fahrzeugen am hinteren Ende angebrachten Stützschild-Anordnungen müssen daher zum Verfahren aus ihrer oberen Ruhelage oberhalb des Böschungsraumes in ihre in den Boden eingedrückte untere Ruhelage über sehr große Verfahrwege des Schildes verfahren werden. Dies bedingt, daß die Stützschild-Anordnungen weit nach oben über den Rahmen hinausragen. Insbesondere wenn im hinteren Bereich des Rahmens Aufbauten, und zwar insbesondere Arbeitsgeräte, auf dem Rahmen angebracht sind, führt dies zu erheblichen Problemen. Insbesondere wenn auf dem Rahmen Seilwinden zur Aufbringung sehr hoher Zugkräfte angeordnet sind, hat sich die Verankerung solcher Arbeits-Fahrzeuge mittels des Schildes im Boden als nicht ausreichend erwiesen. Darüber hinaus sind die Stützwege sehr lang mit der Konsequenz, daß die Stützschildanordnung sehr schwer ausgebildet sein muß.

Der Erfindung liegt die Aufgabe zugrunde, ein Arbeits-Fahrzeug der gattungsgemäßen Art so auszugestalten, daß eine besonders feste Verankerung des Fahrzeugs mittels der Stützschild-Anordnung im Boden erreichbar ist.

Diese Aufgabe wird erfindungsgemäß durch die Merkmale im Kennzeichnungsteil des Anspruches 1 gelöst. Durch die erfindungsgemäße Anordnung der Stützschild-Anordnung wird erreicht, daß nur sehr kurze Verfahrwege von der oberen Ruhelage des Schildes in die untere, in den Boden eingedrungene Ruhelage zu überwinden sind. Die Stützwege sind also sehr kurz mit der Folge, daß die Stützschild-Anordnung sich nach oben nicht oder nur geringfügig über die Oberseite des Rahmens zu erstrecken braucht, so daß auf dem Rahmen angebrachte Arbeitsgeräte, beispielsweise ein Drehkran, nicht behindert werden. Gleichzeitig werden die an der Stützschild-Anordnung bei einer entsprechenden horizontalen Belastung angreifenden Kräfte und Momente stark reduziert, d.h. die Stützschild-Anordnung kann höhere Kräfte aufnehmen bzw. alternativ oder kumulativ leichter ausgeführt werden. Eine Erhöhung der Verankerung im Boden wird dadurch erreicht, daß wegen des Längsversatzes von Rahmenende und Stützschild-Anordnung das Arbeits-Fahrzeug mit seinem Rahmenende gegen einen Erdwall gesetzt werden kann, so daß gleichsam eine doppelte Verankerung erreicht wird. Ein solcher Erwall kann mittels des Stützschildes aufgeschoben werden. Gerade wenn das Arbeits-Fahrzeug als Bergefahrzeug mit einer schweren Seilwinde ausgerüstet ist, kann eine solche doppelte Verankerung Voraussetzung dafür sein, daß die entsprechenden Zugkräfte mittels der Seilwinde wirksam ausgeübt werden können.

Die Ansprüche 2 und 3 geben vorteilhafte Ausgestaltungen der Erfindung an. Weitere Vorteile und Merkmale der Erfindung ergeben sich aus der nachfolgenden Beschreibung eines Ausführungsbeispieles anhand der Zeichnung. Es zeigt

Fig. 1 ein Arbeits-Fahrzeug nach der Erfindung in einer Seitenansicht,

Fig. 2 eine Draufsicht auf das Fahrzeug nach Fig. 1, wobei der in Fig. 1 gezeigte Drehkran nicht dargestellt ist,

Fig. 3 eine Seitenansicht einer Stützschild-Anordnung des Arbeits-Fahrzeuges in seiner oberen Ruhelage und

Fig. 4 die Stützschild-Anordnung in der ausgefahrenen Stellung.

Bei dem in der Zeichnung dargestellten Fahrzeug handelt es sich um einen Dreiachs-Bergekran. Dieses Fahrzeug weist einen Rahmen 1 auf, der mit einer Vorderachse 2 mit lenkbaren Vorderrädern 3 und zwei Hinterachsen 4, 5 mit Hinterrädern 6 versehen ist. Alle Räder 3, 6 sind antreibbar. Vor der Vorderachse 2 ist auf dem Rahmen 1 ein Fahrerhaus 7 angeordnet. Am vorderen Querträger 8 des Rahmens 1 sind Ösen 9 zum Einhängen von Abschleppgeschirren o. dgl. angebracht. Der Böschungsraum 1o unterhalb des Rahmens 1 und vor den Vorderrädern 3 wird nach oben durch eine sogenannte Böschungslinie 11 begrenzt, die zwischen dem vorderen Auflagepunkt 12 jedes Vorderrades 3 auf dem Boden 13 und der Unterseite des durch den Querträger 8 gebildeten vorderen Endes des Rahmens 1 verläuft. Unterhalb dieser Böschungslinie 11 dürfen sich keine Fahrzeugteile befinden. Der vordere Böschungswinkel α zwischen der Böschungslinie 11 und dem Boden 13 beträgt zwischen 3o° und 35°. Durch diesen vorderen Böschungswinkel werden die Neigungsänderungen im Gelände begrenzt, die das Fahrzeug überwinden kann, ohne daß es mit seinem vorderen Bereich auf dem Boden aufsetzt.

Im Bereich zwischen der Vorderachse 2 und der vorderen Hinterachse 4 befindet sich eine - hydraulisch antreibbare - Seilwinde 14, die für die Haupt-Berge-arbeiten eingesetzt wird, mittels derer also große Zugkräfte, in der Größenordnung von 2oo bis 3oo kN ausgeübt werden können.

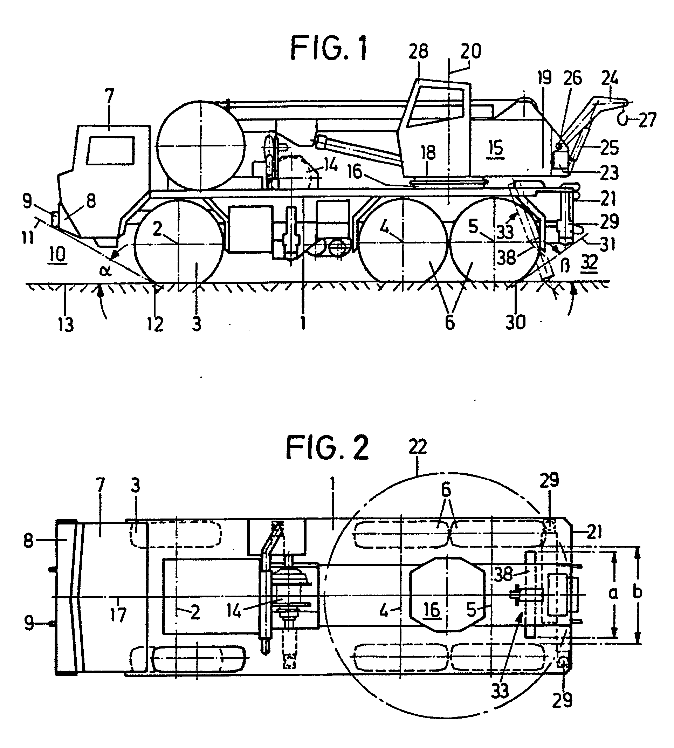

Zwischen den Hinterachsen 4, 5 ist ein Drehkran 15 angeordnet. Sein Untergestell 16 ist symmetrisch zur Mittel-Längs-Achse 17 des Rahmens 1 und symmetrisch zu den Hinterachsen 4, 5 auf dem Rahmen 1 angebracht. Auf dem Untergestell 16 ist über einen Drehkranz 18 ein Drehgestell 19 um die vertikale Mittel-Achse 2o des Drehkranzes 18 drehbar gelagert. Das Drehgestell 19 ragt einseitig erheblich über den Drehkranz 18 hinaus, und zwar - in der in Fig. 1 dargestellten, zur Mittel-Längs-Achse 17 symmetrischen Ruhelage - etwa bis zum hinteren Rahmenende 21.

Der vom Drehgestell 19 überschwenkte Bereich 22, der deutlich seitlich über den Rahmen 1 hinausgeht, ist in Fig. 2 angedeutet. Am radial äußeren Ende des Drehgestells 19 ist ein Wipp-Ausleger 24 angebracht, der mittels eines hydraulisch beaufschlagbaren Kolben-Zylinder-Antriebs 25 um eine Schwenkachse 26 am Drehgestell 19 schwenkbar ist. Am freien Ende des Auslegers 24 ist ein Lasthaken 27 o. dgl. angebracht. Auf dem Drehgestell 19 ist auch ein Bedienerhaus 28 angebracht.

Am hinteren Rahmenende 21 sind hinter den hinteren Hinterrädern 6, also im Bereich der hinteren seitlichen Ecken des Rahmens 1, hydraulisch ausfahrbare Stützen 29 angebracht, die zur vertikalen Lastaufnahme auf den Boden 13 aufsetzbar sind.

Zwischen dem hinteren Auflagepunkt 3o der hinteren Hinterräder 6 und dem bodennächsten Bereich des hinteren Rahmenendes 21 verläuft eine hintere Böschungslinie 31, die mit dem Boden 13 einen hinteren Böschungswinkel β einschließt, der 3o° bis 4o° und üblicherweise 35° bis 38° beträgt. Unter dieser hinteren Böschungslinie wird ein Böschungsraum 32 begrenzt, der frei von Fahrzeugteilen ist. Die Funktion der hinteren Böschungslinie 31 entspricht der der vorderen Böschungslinie 11. Im vorliegenden Fall wird die hintere Böschungslinie 31 im Bereich des hinteren Rahmenendes 21 durch die unteren Enden der Stützen 29 in hochgefahrenem Zustand begrenzt.

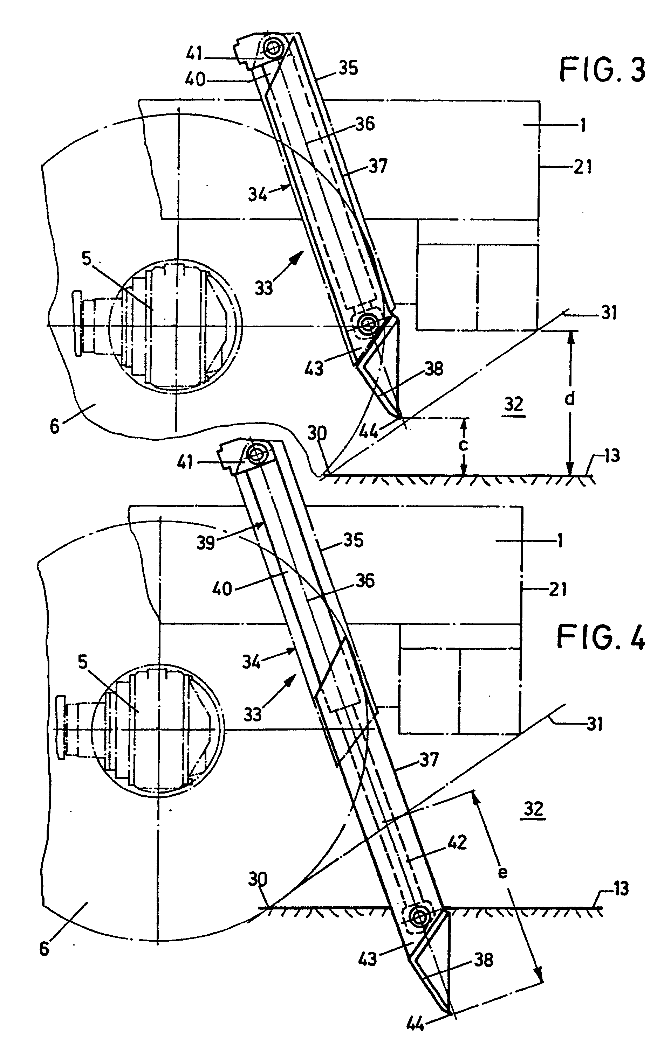

Der Boden 13 wird hierbei als ebene Bezugsfläche angesehen, der durch die Unterseiten der Räder 3, 6 definiert wird. Zwischen den hinteren Hinterrädern 6 und unmittelbar hinter der hinteren Hinterachse 5 ist eine Stützschild-Anordnung 33 am Rahmen 1 angebracht. Sie weist eine robuste Teleskop-Führung 34 auf, die aus einem äußeren, am Rahmen 1 angebrachten Führungsrohr 35 und einem in diesem in Richtung ihrer Längsachse 36 verschiebbar geführten inneren Führungsrohr besteht. Am unteren freien Ende des inneren Führungsrohres 37 ist ein Schild 38 befestigt, der sich - wie aus Fig. 2 hervorgeht - zwischen den hinteren Hinterrädern 6 im wesentlichen über den zwischen diesen befindlichen freien Raum erstreckt. Die maximale Breite a ist also auf jeden Fall etwas kleiner als der innere (lichte) Abstand b der zur hinteren Hinterachse 5 gehörigen Hinterräder 6. Wie insbesondere aus den Figuren 3 und 4 hervorgeht, ist die Längsachse 36 der Teleskop-Führung 34 geringfügig zur Vertikalen geneigt, und zwar in der Weise, daß der Abstand des oberen Endes der Teleskop-Führung 34 von der vertikalen Mittel-Achse 2o kleiner ist als der Abstand des Schildes 38 von dieser Achse 2o. In der Teleskop-Führung 34 ist ein hydraulisch beaufschlagbarer Kolben-Zylinder-Antrieb 39 angeordnet, dessen Zylinder 4o an dem das obere Ende der Teleskop-Führung 34 bildenden Boden 41 des äußeren Führungsrohres 35 und dessen Kolbenstange 42 an dem dem Schild 38 benachbarten Boden 43 des inneren Führungsrohres 37 angelenkt sind. Wie aus Fig. 3 hervorgeht, befindet sich der Schild 38 in seiner hochgefahrenen Ruhelage, also in völlig zusammengefahrenem Zustand der Teleskop-Führung 34, mit seiner Unterkante 44 unmittelbar oberhalb der hinteren Böschungslinie 31, und zwar in der Nähe des hinteren Auflagepunktes 3o. Es gilt, daß sich die Unterkante 44 in dieser Ruhelage etwa in dem dem hinteren Auflagepunkt 3o benachbarten ersten Drittel der Gesamtlänge der hinteren Böschungslinie 31 zwischen hinterem Auflagepunkt 3o und hinterem Rahmenende 21 befindet. Dies bedeutet gleichzeitig, daß der Abstand c der Unterkante 44 des Schildes 38 vom Boden 13 nur höchstens die Hälfte des Abstandes d des hinteren unteren Rahmenendes 21 vom Boden 13 beträgt. Entsprechend klein ist der zu überwindende Freiraum, bis der Schild 38 - beginnend mit seiner Unterkante 44 - beim Ausfahren der Teleskop-Führung 34 in den Boden 13 eindringt. Die Teleskop-Führung 34 ragt nur geringfügig über die Oberseite des Rahmens 1 hinaus und kann ohne weiteres unterhalb des Drehgestells 19 enden, da der Verfahrweg e des Schildes 38 sehr klein ist.

**Ansprüche**

1. Arbeits-Fahrzeug, insbesondere Berge-Fahrzeug, mit einem Rahmen (1), der über mindestens eine Vorderachse (2) mit Vorderrädern (3) und mindestens eine Hinterachse (4 bzw. 5) mit Hinterrädern (6) gegenüber dem Boden (13) abgestützt ist, und mit einer Stützschild-Anordnung (33) im Bereich des hinteren Rahmenendes (21), die eine am Rahmen (1) angebrachte Teleskop-Führung (34) mit einem nach unten ausfahrbaren, in den Boden (13) drückbaren Schild (38) aufweist, wobei der Schild (38) sich in einer oberen Ruhelage vollständig oberhalb eines von Fahrzeugteilen freien hinteren Böschungsraumes (32) und in einer unteren ausgefahrenen Lage unterhalb dieses Böschungsraumes (32) befindet, der im Querschnitt durch eine sich vom hinteren Auflagepunkt (3o) eines Hinterrades (6) zum unteren hinteren Rahmenende (21) erstreckenden hinteren Böschungslinie (31) einerseits und durch den ebenen Boden (13) begrenzt wird, dadurch gekennzeichnet, daß die Stützschild-Anordnung (33) zwischen den einer hinteren Hinterachse (5) zugeordneten Hinterrädern (6) und nahe an dieser Hinterachse (5) angeordnet ist.

2. Fahrzeug nach Anspruch 1, dadurch gekennzeichnet, daß der Schild (38) sich in seiner oberen Ruhelage oberhalb der dem hinteren Auflagepunkt (3o) des jeweiligen Hinterrades (6) zugeordneten ersten Hälfte der hinteren Böschungslinie (31) befindet.

3. Fahrzeug nach Anspruch 1, insbesondere mit einem oberhalb der Stützschild-Anordnung (33) befindlichen Arbeitsgerät (Drehkran 15), dadurch gekennzeichnet, daß die Stützschild-Anordnung (33) sich höchstens geringfügig über den Rahmen (1) nach oben erstreckt.

## Claims

1. A work vehicle, particularly a recovery vehicle, with a chassis (1) which is supported in respect of the ground (13) by at least one front axle (2) with front wheels (3) and at least one rear axle (4 or 5) and comprising a bracing blade arrangement (33) in the region of the rear end (21) of the chassis and comprising, mounted on the chassis (1) a telescopic guide (34) with a downwardly extensible blade (38) which can be pressed into the ground (13), the blade (38), when in an upper rest position, being disposed completely above a rear slope space (32) which is free from vehicle parts and which, in a lower extended position, is situated underneath this slope space (32) which is defined in cross-section by the flat ground (13) on the one hand and by a rear slope line (31) extending from the rear impact point (30) of a tyre of the rear wheel (6) to the lower rear end (21) of the chassis on the other, characterised in that the bracing blade arrangement (33) is disposed between the rear wheels (6) associated with a rear rear axle (5) and close to this rear axle (5).

2. A vehicle according to Claim 1, characterised in that in its upper rest position the blade (38) is disposed above the first half of the rear slope line (31) associated with the rear point of impact (30) of the relevant rear wheel (6).

3. A vehicle according to Claim 1, particularly with a working implement (slewing crane 15) which is disposed above the bracing blade arrangement (33), characterised in that the bracing blade arrangement (33) extends at most slightly upwardly beyond the chassis (1).

## Revendications

1. Véhicule de travail, en particulier véhicule lourd de dépannage, comportant un châssis 1, qui est en appui par rapport au sol 13 par l'intermédiaire d'au moins un essieu avant 2 avec des roues avant 3 et d'au moins un essieu arrière (4) respectivement (5) avec des roues arrière (6), et un agencement de bouclier d'appui (33) dans la zone de l'extrémité arrière de châssis (21) qui présente un guidage télescopique (34) mis en place sur le châssis (1) avec un bouclier (38) pouvant être sorti vers le bas et pressé dans le sol (13), le bouclier (38) se trouvant dans une position de repos supérieure complètement au dessus d'un espace de talus (32) arrière libre de toute partie du véhicule et dans une position inférieure déployée en dessous de cet espace de talus (32), qui en section est limité d'une part par une ligne de talus (31) arrière s'étendant à partir du point d'appui arrière (30) d'une roue arrière (2) vers l'extrémité de châssis (21) arrière inférieur et d'autre part par le sol plan (13), véhicule caractérisé par le fait que l'agencement de bouclier d'appui (33) est disposé entre les roues arrière (6) correspondantes à un essieu arrière (5) le plus en arrière et à proximité de cet essieu arrière (5).

2. Véhicule selon la revendication 1, caractérisé en ce que le bouclier (38) se trouve dans sa position de repos supérieure au dessus de la première moitié de la ligne de talus arrière (31), correspondante au point d'appui arrière (30) de la roue arrière (6) respective.

3. Véhicule selon la revendication 1, en particulier comportant un outil de travail (grue pivotante (15)) se trouvant au dessus de l'agencement de bouclier d'appui (33) caractérisé en ce que l'agencement de bouclier d'appui (33) s'étend vers le haut le plus faiblement possible par rapport au châssis (1).

## FIG. 1

## FIG. 2

FIG. 3

FIG. 4